# EUROPEAN PATENT SPECIFICATION

(11) **EP 3 163 825 B1**
(45) Date of publication and mention of the grant of the patent: **21.11.2018**
(21) Application number: 14896873.8
(22) Date of filing: 04.09.2014
(51) Int. Cl.: H04L 27/26

(54) **METHOD AND APPARATUS FOR DETECTING MULTIPATH FRAME HEADER**
VERFAHREN UND VORRICHTUNG ZUR DETEKTION EINES MEHRFACHWEG-FRAME-HEADERS
PROCÉDÉ ET APPAREIL POUR DÉTECTER UN EN-TÊTE DE TRAME À CHEMINS MULTIPLES

(30) Priority: 30.06.2014 CN 201410306377
(43) Date of publication of application: 03.05.2017
(73) Proprietor: Sanechips Technology Co., Ltd., Nanshan District Shenzhen, Guangdong 518055 (CN)
(72) Inventor: JIA, Chouchou, Shenzhen Guangdong 518055 (CN)
(74) Representative: Brevalex
(86) International application number: PCT/CN2014/085928
(87) International publication number: WO 2016/000310

(56) References cited:
- WO-A1-2006/063424
- CN-A- 101 079 647
- CN-A- 102 469 057
- CN-A- 102 970 109
- US-A1- 2005 185 743
- US-A1- 2012 027 419
- US-A1- 2012 141 116

## Description

### TECHNICAL FIELD

The disclosure relates to a synchronization receiving technology in the field of digital optical communication, and more particularly to a method and device for detecting a multipath frame header.

### BACKGROUND

Along with rapid increase of a market broadband requirement of a bearer network, a 100-Gigabit Ethernet (100GbE) port is to be launched for a core router. A 100-Gigabit (100G) device is also a definite development direction, and a Dense Wavelength Division Multiplexing (DWDM) device is required to support 100G long-distance transmission.

US 2012/0141116 A1 discusses a method for recovering an OTUk frame, comprising: receiving an optical signal sent from the OTUk frame to an optical module; converting the optical signal into an electrical signal, performing electrical equalization and demodulation on the electrical signal, and recovering multi-lane data from the demodulated signal; aligning and rearranging the data on each lane according to a lane sequence identifier included in an overhead frame header of the data; and recovering the OTUk frame according to the aligned and rearranged data.

US 2012/0027419 A1 provides an optical communication system to implement frame/symbol synchronization in coherent optical OFDM by cross-correlating a synchronization pattern within the symbol header with a model synchronization pattern.

US 2005/0185743 A1 discusses an apparatus for burst and timing synchronization of an input signal, comprising: detecting the burst onset of the input signal; correcting the frequency offset between adjacent preamble sequences of frames; detecting the timing of the frame symbol of the frequency offset corrected signal; and removing inter-symbol interference from the frequency offset corrected signal.

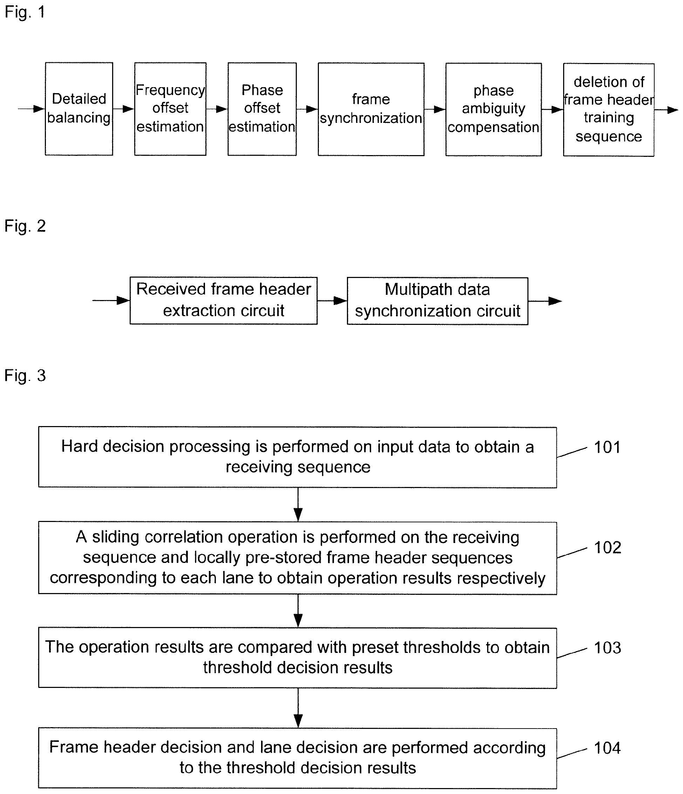

Frame synchronization technology plays a very important role in optical communication, and the position of a frame synchronization module at a receiving end of an optical communication system is shown in Fig. 1. A signal enters the frame synchronization module after detailed balancing, frequency offset estimation and phase offset estimation. Frame synchronization processing mainly realizes a frame header marking function to provide frame header indication information for subsequent phase ambiguity compensation and frame header training sequence deletion operations, and also indicates a synchronization state of the system and reflects quality of a lane condition.

Frame synchronization technology is to implement searching and marking of a frame header by virtue of a group synchronization code inserted into a signal. The insertion of the group synchronization code includes two manners of centralized insertion and distributed insertion, and corresponding inserted signals are called as a code block and a code element respectively. Both the manners are used for an optical communication system according to different requirements. Any one manner can be independently used or the two can be mixed for use. In a 100G frame synchronization method, sometimes the frame header detection is performed by virtue of the autocorrelation characteristic of the code block period, and sometimes the frame header detection is performed according to the period characteristic of appearance of the code element. The detection process usually includes two stages of searching and capturing, corresponding to desynchronization and synchronization states respectively. After the frame header is detected, the position of the frame header is marked for a subsequent related module to use. Indexes for evaluating quality of a frame synchronization method include frame synchronization establishment time and stability of the system after synchronization. A good frame synchronization method may implement rapid synchronization of the system and ensures that the system works stably and does not frequently enter the desynchronization state if a lane condition is stable and no sudden lane deterioration factors appear after synchronization.

A conventional optical communication frame synchronization solution is shown in Fig. 2. The device for synchronizing multi-lane data transmission is configured to synchronize multi-lane data in a multi-path data source into a receiver circuit through a data sending physical path. The multi-path data source includes frame header data having a frame synchronization signal. The device includes a multi-lane data synchronization circuit, which is configured to implement synchronization of multi-lane data transmission, and the multi-lane data synchronization circuit includes a received frame header extraction circuit and a multi-path data synchronization circuit, wherein the received frame header extraction circuit receives a data stream on the data sending physical path, extracts the frame header data therefrom, and sends it to the multipath data synchronization circuit. The multipath data synchronization circuit converts the abovementioned data stream into a synchronized data stream by virtue of the frame synchronization signal in the frame header data according to the frame header data sent by the received frame header extraction circuit.

However, how to implement continuous optimization of an optical communication frame synchronization solution to implement rapid synchronization and continuously improve stability of a system after frame synchronization processing (i.e., making probability of desynchronization of the system after synchronization low under the condition that the lane environment is relatively stable) is a technical problem with which those skilled in the art are confronted all the time.

### SUMMARY

The invention is defined by the appended claims. In order to solve the existing technical problem, an aspect of the disclosure is intended to provide a method and device for detecting a multipath frame header.

The aspect of the disclosure provides a method for detecting a multipath frame header, the method including that:
hard decision processing is performed on input data to obtain a receiving sequence;
a sliding correlation operation is performed on the receiving sequence and locally pre-stored frame header sequences corresponding to each lane to obtain operation results respectively;
the operation results are compared with preset thresholds to obtain threshold decision results; and
frame header decision and lane decision are performed according to the threshold decision results.

In the locally pre-stored frame header sequences corresponding to all the lanes, autocorrelations of each frame header sequence may be higher than a first threshold value, and cross correlation between any two frame header sequences may be lower than a second threshold value.

The step that hard decision processing is performed on the input data to obtain the receiving sequence may include that:
hard decision is performed according to a sample point sign bit of the input data, a hard decision result being 0 if the sample point sign bit is 0, the hard decision result being 1 if the sample point sign bit is 1, and the hard decision results forming the receiving sequence.

The step that the sliding correlation operation is performed on the receiving sequence and the locally pre-stored frame header sequences corresponding to each lane to obtain the operation results respectively may include that:
a sliding exclusive or and summation operation is performed on the receiving sequence and N frame header sequences corresponding to N lanes respectively, length of exclusive or and summation being the same as length of the frame header sequence, and the operation result being sliding exclusive or and summation result; and the sliding exclusive or and summation operation may be performed on the receiving sequence and the N frame header sequences to obtain N operation results respectively, N being an integer more than 1.

Tthe step that the operation results are compared with the preset thresholds to obtain the threshold decision results may include that:
the operation result of the sliding correlation operation over the receiving sequence and the nth frame header sequence is compared with a first preset threshold and a second preset threshold respectively, and when the operation result is more than or equal to the first threshold, the threshold decision result indicates that the receiving sequence and the nth frame header sequence are opposite in phase; and when the operation result is smaller than or equal to the second threshold, the threshold decision result indicates that the receiving sequence and the nth frame header sequence are not opposite in phase, 0<n<N and n being an integer.

The step that frame header decision and lane decision are performed according to the threshold decision results may include that:
when the operation result is smaller than or equal to the second threshold, a decision that a position where the receiving sequence is located is a frame header position is made, and a lane number corresponding to the nth frame header sequence participating in the corresponding operation is acquired; otherwise, a decision that the position where the receiving sequence is located is not the frame header position is made. Another aspect of the disclosure further provides a device for detecting a multipath frame header, the device including: a hard decision unit, a sliding correlation unit, a threshold decision unit, and a frame header decision and lane decision unit.

The hard decision unit may be configured to perform hard decision processing on input data to obtain a receiving sequence.

The sliding correlation unit may be configured to perform a sliding correlation operation on the receiving sequence and locally pre-stored frame header sequences to obtain operation results respectively.

The threshold decision unit may be configured to compare the operation results with preset thresholds to obtain threshold decision results.

The frame header decision and lane decision unit may be configured to perform frame header decision and lane decision according to the threshold decision results.

In the locally pre-stored frame header sequences corresponding to all the lanes, autocorrelations of each frame header sequence may be higher than a first threshold value, and cross correlation between any two frame header sequences may be lower than a second threshold value.

The hard decision unit may further be configured to perform hard decision according to a sample point sign bit of the input data, a hard decision result being 0 if the sample point sign bit is 0, the hard decision result being 1 if the sample point sign bit is 1, and the hard decision results forming the receiving sequence.

The sliding correlation unit may further be configured to perform a sliding exclusive or and summation operation on the receiving sequence and N frame header sequences corresponding to N lanes respectively, length of exclusive or and summation being the same as length of the frame header sequence, and the operation result being sliding exclusive or and summation result; and the sliding exclusive or and summation operation may be performed on the receiving sequence and the N frame header sequences to obtain N operation results respectively, N being an integer more than 1.

The threshold decision unit may further be configured to compare the operation result of the sliding correlation operation over the receiving sequence and the nth frame header sequence with a first preset threshold and a second preset threshold respectively, and when the operation result is more than or equal to the first threshold, the threshold decision result indicates that the receiving sequence and the nth frame header sequence are opposite in phase; and when the operation result is smaller than or equal to the second threshold, the threshold decision result indicates that the receiving sequence and the nth frame header sequence are not opposite in phase, 0<n<N and n being an integer.

The frame header decision and lane decision unit may further be configured to, when the operation result is smaller than or equal to the second threshold, make a decision that a position where the receiving sequence is located is a frame header position, and acquire a lane number corresponding to the nth frame header sequence participating in the corresponding operation. Another aspect of the disclosure further provides a computer-readable storage medium, the computer-readable storage medium including a set of computer-executable instructions, the instructions being configured to execute the abovementioned method for detecting the multipath frame header.

According to the method and device for detecting the multipath frame header provided by the aspects of the disclosure, two nodes involved in optical communication may rapidly establish a link for communication. Anti-interference capability is high (a probability of desynchronization of a system after synchronization is low under the condition that a lane environment is relatively stable). Requirement on variability of a lane frequency offset range is met. The advantages of simplicity for frame synchronization implementation, easiness for hardware implementation, stable synchronization performance and the like are achieved.

Since N code block sequences for correlation receiving are very high in autocorrelation but very low in cross correlation, occurrence of missing detection and false alarm is avoided, and synchronization rapidness and reliability are improved. The code block sequences are differently processed to detect the frame header and the lane number while at the same time the large frequency offset value of the link is estimated, so that compensation for the large frequency offset is accelerated, and a link establishment time of the system is shortened. In addition, four correlation sequences corresponding to four different lanes respectively are locally pre-stored, so that influence on correlation detection by interference between the lanes may be effectively eliminated.

### BRIEF DESCRIPTION OF THE DRAWINGS

Fig. 1 is a processing block diagram of a receiving end of an optical communication system according to a conventional art;
Fig. 2 is a schematic diagram of a device for synchronizing multi-lane data transmission according to the conventional art;
Fig. 3 is a flowchart of a method for detecting a multipath frame header according to an embodiment of the disclosure;
Fig. 4 is a structure diagram of a device for detecting a multipath frame header according to an embodiment of the disclosure;
Fig. 5 is a structure diagram of a sending end according to an embodiment of the disclosure;
Fig. 6 is a schematic diagram of a typical data frame format according to an embodiment of the disclosure;
Fig. 7 is a schematic diagram of a frame header sequence according to an embodiment of the disclosure;
Fig. 8 is a schematic diagram of a frame synchronization principle of a receiving end according to an embodiment of the disclosure;
Fig. 9a is a schematic diagram of an autocorrelation of a frame header sequence corresponding to original data XI according to an embodiment of the disclosure;
Fig. 9b is a schematic diagram of an autocorrelation of a frame header sequence corresponding to original data XQ according to an embodiment of the disclosure;
Fig. 9c is a schematic diagram of an autocorrelation of a frame header sequence corresponding to original data YI according to an embodiment of the disclosure;
Fig. 9d is a schematic diagram of an autocorrelation of a frame header sequence corresponding to original data YQ according to an embodiment of the disclosure;
Fig. 9e is a schematic diagram of a cross correlation between frame header sequences of original data XI and XQ according to an embodiment of the disclosure;
Fig. 9f is a schematic diagram of a cross correlation between frame header sequences of original data XI and YI according to an embodiment of the disclosure;
Fig. 9g is a schematic diagram of a cross correlation between frame header sequences of original data XI and YQ according to an embodiment of the disclosure;
Fig. 9h is a schematic diagram of a cross correlation between frame header sequences of original data XQ and YI according to an embodiment of the disclosure;
Fig. 9i is a schematic diagram of a cross correlation between frame header sequences of original data XQ and YQ according to an embodiment of the disclosure; and
Fig. 9j is a schematic diagram of a cross correlation between frame header sequences of original data YI and YQ according to an embodiment of the disclosure.

### DETAILED DESCRIPTION

The technical solutions of the disclosure will be further elaborated below with reference to the drawings and specific embodiments.

In order to implement multipath frame header detection, an embodiment of the disclosure provides a method for detecting a multipath frame header, and as shown in Fig. 3. The method mainly includes the following steps.

Step 101: hard decision processing is performed on input data to obtain a receiving sequence.

As shown in Fig. 1, the input data for frame synchronization processing is soft information subjected to frequency offset and phase offset correction and compensation, and it can be understood that the input data is free of influence of the frequency offset and the phase offset.

Firstly hard decision processing is performed on the input data for frame synchronization processing. That is, hard decision is performed according to a sample point sign bit of the input data. The hard decision result is 0 if the sample point sign bit is 0, and the hard decision result is 1 if the sample point sign bit 1. The hard decision results form the receiving sequence.

Step 102: a sliding correlation operation is performed on the receiving sequence and locally pre-stored frame header sequences corresponding to each lane to obtain operation results respectively.

The number of the lanes during multi-lane data transmission is selected according to a practical requirement, and for example, the number of the lanes may be 4, or 8, or 16, etc..

A frame header sequence corresponding to each lane is set according to one embodiment of the disclosure, and these frame header sequences are required to meet conditions below: autocorrelation of each frame header sequence is higher than a first threshold value, and a cross correlation between any two frame header sequences is lower than a second threshold value. Values of the first threshold value and the second threshold value may be selected according to a practical application requirement.

That is, the frame header sequences corresponding to each lane are different, and moreover, high autocorrelations and low cross correlations of these frame header sequences must be ensured.

An autocorrelation is a correlation of two different time points in a random process. Furthermore, a cross correlation is a correlation of different time points in two random processes. The autocorrelation is a measure about a correlation degree of a signal, that is, the autocorrelation may be considered as an integral operation over a product obtained by multiplication of the signal and own delayed signal, and the autocorrelation also plays a very important role in signal detection, and is an optimal receiving criterion under a minimum bit error rate principle. The cross correlation in statistics is adopted to represent a covariance cov(X, Y) between two random vectors X and Y. In the field of signal processing, the cross correlation is a measure adopted to represent a similarity between two signals, and is usually compared with a known signal to seek for a characteristic in an unknown signal; and it is a function relative to time between the two signals, and is also called a sliding dot product sometimes. That is, the cross correlation may be considered as an integral operation over a product obtained by multiplication of a signal and a delayed signal of another signal. High autocorrelation and low cross correlation is a necessary condition for screening a frame header sequence.

Preferably, the step that the sliding correlation operation is performed on the receiving sequence and the locally pre-stored frame header sequences corresponding to each lane to obtain the operation results respectively includes that:
a sliding exclusive or and summation operation is performed on the receiving sequence and N frame header sequences corresponding to N lanes respectively. The length of exclusive or and summation is the same as that of the frame header sequence, and the operation result is a sliding exclusive or and summation result. The sliding exclusive or and summation operation is performed on the receiving sequence and the N frame header sequences to obtain N operation results respectively, N being an integer more than 1.

The logical expression of an exclusive or operation is: 0 is obtained if being the same and 1 is obtained if being different; and that is, if a certain bit of the receiving sequence is the same as a certain bit of a frame header sequence for the exclusive or operation, an exclusive or operation result is 0, and if a certain bit of the receiving sequence is different from a certain bit of the frame header sequence for the exclusive or operation, the exclusive or operation result is 1. Then, the sliding exclusive or and summation result may reflect the number of inconsistent elements in the receiving sequence and the frame header sequence for the exclusive or operation.

Step 103: the operation results are compared with preset thresholds to obtain threshold decision results.

Specifically, the operation result of the sliding correlation operation over the receiving sequence and the nth frame header sequence is compared with a first preset threshold and a second preset threshold respectively. When the operation result is more than or equal to the first threshold, the threshold decision result indicates that the receiving sequence and the nth frame header sequence are opposite in phase; and when the operation result is smaller than or equal to the second threshold, the threshold decision result indicates that the receiving sequence and the nth frame header sequence are not opposite in phase, 0<n<N and n being an integer.

Wherein, values of the first threshold and the second threshold may be set according to a practical application requirement.

Step 104: frame header decision and lane decision are performed according to the threshold decision results.

Specifically, when the operation result is smaller than or equal to the second threshold, a decision that the position where the receiving sequence is located is a frame header position is made, and the lane number corresponding to the nth frame header sequence participating in the corresponding operation is acquired; otherwise, a decision that the position where the receiving sequence is located is not the frame header position is made.

It is important to note that the method for detecting the multipath frame header in the abovementioned embodiment of the disclosure may be applied to a data receiving end device of an optical communication system.

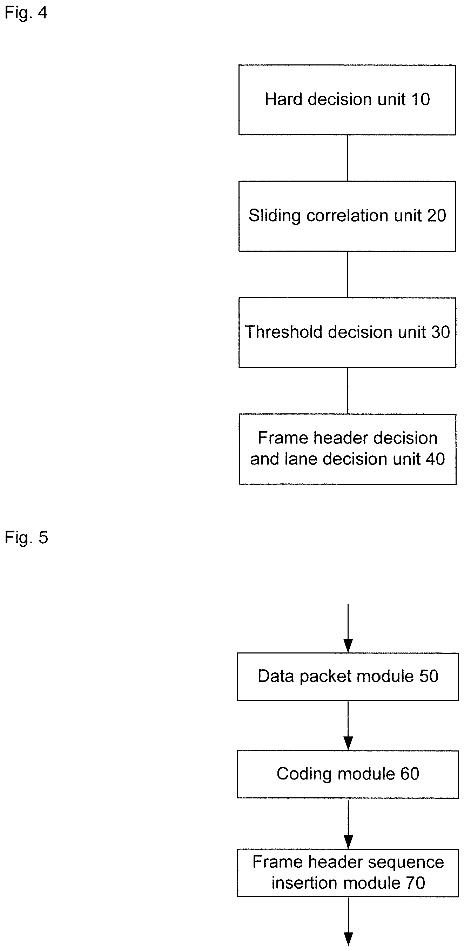

Corresponding to the method for detecting a multipath frame header in the embodiment of the disclosure, an embodiment of the disclosure further provides a device for detecting a multipath frame header, and as shown in Fig. 4. The device includes: a hard decision unit 10, a sliding correlation unit 20, a threshold decision unit 30 and a frame header decision and lane decision unit 40, wherein
the hard decision unit 10 is configured to perform hard decision processing on input data to obtain a receiving sequence;
the sliding correlation unit 20 is configured to perform a sliding correlation operation on the receiving sequence and locally pre-stored frame header sequences to obtain operation results;
the threshold decision unit 30 is configured to compare the operation results with preset thresholds to obtain threshold decision results; and
the frame header decision and lane decision unit 40 is configured to perform frame header decision and lane decision according to the threshold decision results.

A frame header sequence corresponding to each lane is set according to an embodiment of the disclosure. These frame header sequences are required to meet conditions below: autocorrelations of each frame header sequence are higher than a first threshold value, and a cross correlation between any two frame header sequences is lower than a second threshold value. Values of the first threshold value and the second threshold value may be selected according to a practical application requirement. That is, the frame header sequences corresponding to each lane are different, and moreover, high autocorrelations and low cross correlations of these frame header sequences must be ensured.

The number of the lanes during multi-lane data transmission is selected according to a practical requirement, and for example: the number of the lanes may be 4, or 8, or 16, etc..

Preferably, the hard decision unit 10 is further configured to perform hard decision according to a sample point sign bit of the input data, a hard decision result is 0 if the sample point sign bit is 0, and the hard decision result is 1 if the sample point sign bit 1. The hard decision results form the receiving sequence.

Preferably, the sliding correlation unit 20 is further configured to perform a sliding exclusive or and summation operation on the receiving sequence and N frame header sequences corresponding to N lanes respectively. The length of exclusive or and summation is the same as that of the frame header sequence, and the operation result is sliding exclusive or and summation result. The sliding exclusive or and summation operation is performed on the receiving sequence and the N frame header sequences to obtain N operation results respectively, N being an integer more than 1.

The logical expression of an exclusive or operation is: 0 is obtained if being the same and 1 is obtained if being different; and that is, if a certain bit of the receiving sequence is the same as a certain bit of a frame header sequence for the exclusive or operation, an exclusive or operation result is 0, and if a certain bit of the receiving sequence is different from a certain bit of the frame header sequence for the exclusive or operation, the exclusive or operation result is 1. Then, the sliding exclusive or and summation result may reflect the number of inconsistent elements in the receiving sequence and the frame header sequence for the exclusive or operation.

Preferably, the threshold decision unit 30 is further configured to compare the operation result of the sliding correlation operation over the receiving sequence and the nth frame header sequence with a first preset threshold and a second preset threshold respectively, and when the operation result is more than or equal to the first threshold, the threshold decision result indicates that the receiving sequence and the nth frame header sequence are opposite in phase; and when the operation result is smaller than or equal to the second threshold, the threshold decision result indicates that the receiving sequence and the nth frame header sequence are not opposite in phase, 0<n<N and n being an integer.

Preferably, the frame header decision and lane decision unit 40 is further configured to, when the operation result is smaller than or equal to the second threshold, a decision that the position where the receiving sequence is located is a frame header position is made, and the lane number corresponding to the nth frame header sequence participating in the corresponding operation is acquired.

It is important to note that the hard decision unit 10, the sliding correlation unit 20, the threshold decision unit 30 and the frame header decision and lane decision unit 40 may be implemented by a Central Processing Unit (CPU), Micro Processing Unit (MPU), Digital Signal Processor (DSP) or Field-Programmable Gate Array (FPGA) in the device for detecting the multipath frame header. The device for detecting the multipath frame header in the embodiment of the disclosure may be located in a data receiving end device of an optical communication system, and then, an embodiment of the disclosure further correspondingly provides a receiving end device including the device for detecting the multipath frame header.

According to the embodiment of the disclosure, since the N code block sequences for correlation receiving are very high in autocorrelation but very low in cross correlation, occurrence of missing detection and false alarm is avoided, and synchronization rapidness and reliability are improved. Accordingly, two nodes involved in optical communication may rapidly establish a link for communication. An anti-interference capability is high (a probability of desynchronization of the system after synchronization under the condition that a lane environment is relatively stable is low). The requirement on variability of a lane frequency offset range is met, and the advantages of simplicity for frame synchronization implementation, easiness for hardware implementation, stable synchronization performance and the like are achieved.

The method and device for detecting the multipath frame header according to the embodiment of the disclosure will be further elaborated below with 4-lane frame synchronization processing as an example.

Frame synchronization processing of the embodiment includes implementation of two parts of a sending end and a receiving end. The structure of the sending end, as shown in Fig. 5, mainly includes: a data packet module 50, a coding module 60 and a frame header sequence insertion module 70. Input data from the sending end is distributed to 4 lanes as original data of optical transmission data after being subjected to data packet processing of the data packet module 50. The original data on the 4 lanes is recorded as XI, XQ, YI and YQ respectively, wherein XI and XQ are transmitted in an X polarization state during optical transmission, and YI and YQ are transmitted in a Y polarization state during optical transmission. The coding module 60 performs data coding on the data subjected to the data packet processing on the 4 lanes respectively to improve an anti-interference capability and error correction capability of the data. The frame header sequence insertion module 70 inserts frame header sequences to the coded data to implement a data framing process according to a data frame format. The framed data may be sent out from the sending end by pre-processing of data sending.

It is important to note that the frame header sequences corresponding to each lane are different, and high autocorrelations and low cross correlations of these frame header sequences must be ensured.

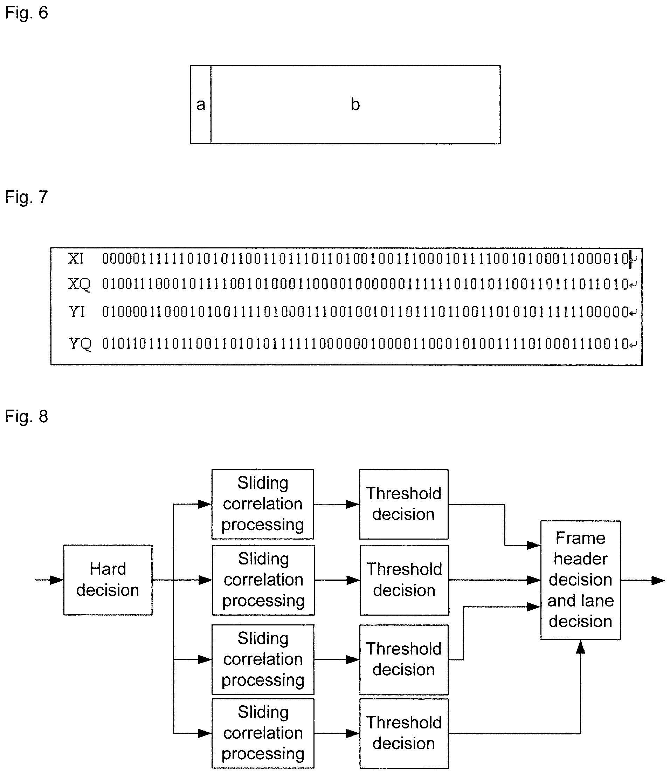

Fig. 6 shows a typical data frame format, wherein a is an input frame header sequence, and b is a coded data frame content. According to the requirement of transmission rate, a typical value of data parallelism on the 4 lanes is 64, so that a typical length value of a in Fig. 6 is 64, the number of 0 of each of 4 frame headers is 32, and it is ensured that there is no influence on balancing of 0 and 1 after insertion of the frame headers. Moreover, the frame header sequences on each lane are different, and are very high in autocorrelation and very low in cross correlation, as shown in Fig. 7.

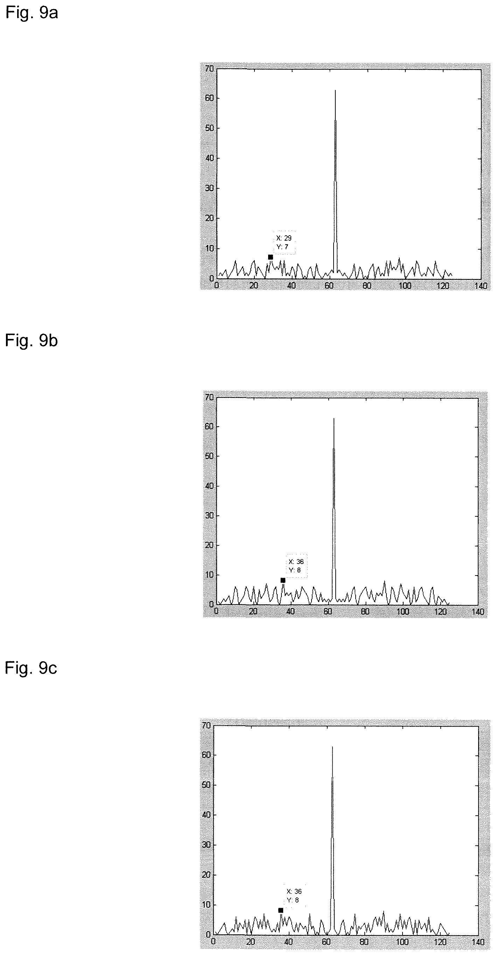

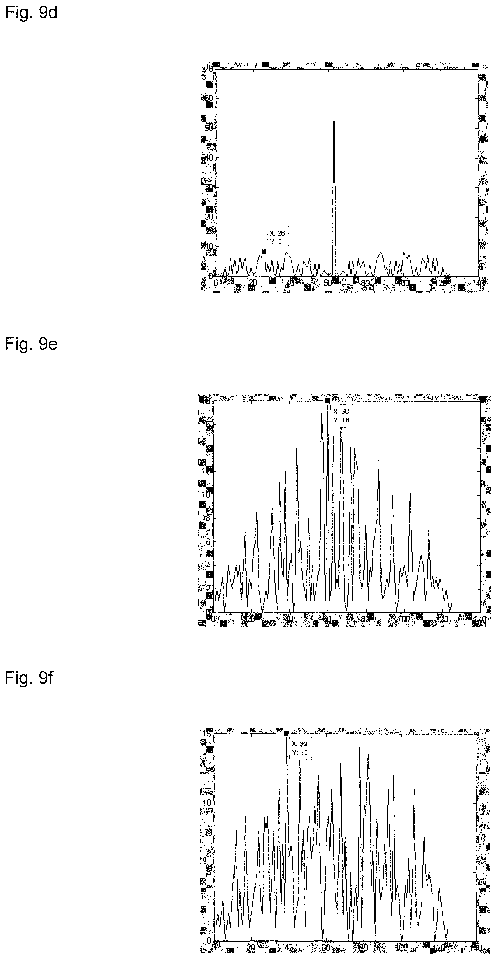

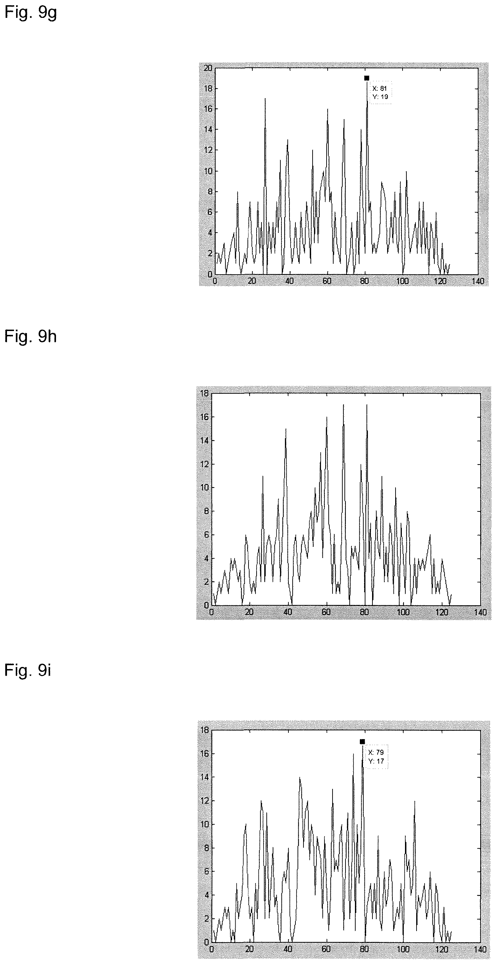

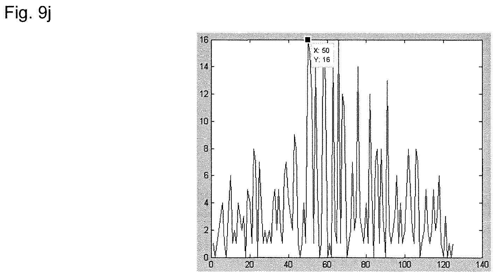

An autocorrelation is a correlation of two different time points in a random process, and moreover, a cross correlation is a correlation of different time points in two random processes. The autocorrelation is a measure about a correlation degree of a signal, that is, the autocorrelation may be considered as an integral operation over a product obtained by multiplication of the signal and own delayed signal. The autocorrelation also plays a very important role in signal detection, and is an optimal receiving criterion under a minimum bit error rate principle. The cross correlation in statistics is adopted to represent a covariance cov(X, Y) between two random vectors X and Y. In the field of signal processing, the cross correlation is a measure adopted to represent a similarity between two signals, and is usually compared with a known signal to seek for a characteristic in an unknown signal. The cross correlation is a function relative to time between the two signals, and sometimes is also called a sliding dot product. That is, the cross correlation may be considered as an integral operation over a product obtained by multiplication of a signal and a delayed signal of another signal. High autocorrelation and low cross correlation is a necessary condition for screening a frame header sequence, and specifically as shown in Fig. 9a∼9j, abscissa axes in the figures represent delay and ordinate axes represent the number of the same values 0 and 1 in the sequences, wherein Fig. 9a represents an autocorrelation of the frame header sequence corresponding to the original data XI, Fig. 9b represents an autocorrelation of the frame header sequence corresponding to the original data XQ, Fig. 9c represents an autocorrelation of the frame header sequence corresponding to the original data YI, Fig. 9d represents an autocorrelation of the frame header sequence corresponding to the original data YQ, Fig. 9e represents a cross correlation between the frame header sequences of the original data XI and XQ, Fig. 9f represents a cross correlation between the frame header sequences of the original data XI and YI, Fig. 9g represents the cross correlation between the frame header sequences of the original data XI and YQ, Fig. 9h represents a cross correlation between the frame header sequences of the original data XQ and YI, Fig. 9i represents a cross correlation between the frame header sequences of the original data XQ and YQ, and Fig. 9j represents a cross correlation between the frame header sequences of the original data YI and YQ.

The frame synchronization principle of the receiving end is shown in Fig. 8. The input data of a frame synchronization module is soft information subjected to frequency offset and phase offset correction and compensation, and it can be understood that the data is free of influence of a frequency offset and a phase offset. The input data for frame synchronization processing is subjected to hard decision processing at first, and the data subjected to the hard decision forms a receiving sequence, and is subjected to a correlation operation with local frame header sequences in the 4 lanes (the same as the frame header sequences inserted into the 4 lanes at the sending end) respectively to calculate the number of inconsistent elements in the receiving sequence and the local 4 frame header sequences. The threshold decision is performed after the correlation operation. When a correlation operation result of the receiving sequence and a frame header sequence reaches a preset threshold value, the position where the receiving sequence is located is determined as the frame header position, and thus the lane number corresponding to the frame header sequence participating in this correlation operation is acquired, and otherwise a decision that the position where the receiving sequence is located is not the frame header position is made. A specific implementation process at the receiving end is as follows.
1: The system waits for a convergent signal of a front-end Constant Modulus Algorithm (CMA) detailed balancing module after being powered on or reset, and after the convergent signal is received, a frame synchronization module/lane synchronization module starts operation. The initial state is Out Of Frame (OOF) and Out Of Lane (OOL).
2: Hard decision processing is performed on input data at first, that is, a decision of 0/1 is made according to a sample point sign bit of the input data. The hard decision results forms a receiving sequence.
3: Exclusive or and summation is performed on the receiving sequence and 4 pre-stored frame header sequences (corresponding to 4 lanes respectively) respectively. The length of the exclusive or and summation length is 64bit.
4: frame synchronization operation: an exclusive or window is slid by bit to find a position of A≥52 (i.e. a first threshold) or A≤12 (i.e. a second threshold), A≥52 representing that the data is opposite in phase, A≤12 representing that the data is not opposite in phase, and A being an exclusive or and summation result.
   Specifically, in the OOF state, if the correlation operation result at positions of which intervals are multiple times of frame length reaches the set threshold value (i.e. A≤12) for 6 times (the number of times may be set to be another value according to a practical requirement), the system enters an IF state;
   in the IF state, if no synchronous frame headers are found for continuously 6 frames (the number of times may be set to be another value according to a practical requirement), it is indicated that the system is in the OOF state, and a frame header is searched again;
   in the OOF state, if frame synchronization processing may not be implemented for continuously 5ms (the number of times may be set to be another value according to a practical value), a Loss Of Frame (LOF) alarm is reported; and
   in an LOF alarm state, the synchronous frame header is found for continuously 5ms (the number of times may be set to be another value according to a practical requirement), the system enters the IF state, and meanwhile, the LOF alarm state is eliminated.
5: A lane synchronization operation is performed after frame synchronization processing:
   lane sequence numbers and lane states are detected and recorded, and X and Y polarization states are distinguished;
   if a current frame detects a repeated lane sequence number (under a normal condition, when correlation operation is performed on a receiving sequence and each frame header sequence corresponding to each of N lanes, only the correlation operation result of the frame header sequence of only one lane and the receiving sequence may reach the set threshold value), an OOL alarm is given, and data of the current frame maintaining the lane sequence number and lane state detected by the previous frame is sent to a subsequent module (such as a phase ambiguity compensation module); and
   if a skew (i.e. a delay difference) value detected by the current frame exceeds [-128UI, +128UI], the OOL alarm is given, wherein UI represents a unit interval. The skew value exceeding [-128UI, +128UI] indicates that the delay difference is excessively great and exceeds processing capability of the system and the alarm is reported, which indicates that the lane condition is too poor.

The embodiment of the disclosure further provides a computer-readable storage medium, which includes a set of computer executable instructions, the instructions being configured to execute the method for detecting the multipath frame header provided by the abovementioned embodiment of the disclosure.

From the above, by implementing the embodiment of the disclosure, the two nodes involved in optical communication may rapidly establish the link for communication. The anti-interference capability is high (the probability of desynchronization of the system after synchronization is low under the condition that the lane environment is relatively stable), and the requirement on variability of the lane frequency offset range is met. The advantages of simplicity for frame synchronization implementation, easiness for hardware implementation, stable synchronization performance and the like are achieved.

Since the N code block sequences for correlation receiving are very high in autocorrelation but very low in cross correlation, occurrence of missing detection and false alarm is avoided, and the synchronization rapidness and reliability are improved. The code block sequences are differently processed, and thus the frame header and the lane number is detected at the same time as a large frequency offset value of the link is estimated, and as a result compensation for a large frequency offset is accelerated, and link establishment time of the system is shortened. In addition, N correlation sequences corresponding to N different lanes respectively are locally pre-stored, so that influence on correlation detection by interference between the lanes may be effectively eliminated.

Those skilled in the art should know that the embodiment of the disclosure may be provided as a method, a system or a computer program product. Therefore, the disclosure may adopt a form of hardware embodiment, software embodiment and combined software and hardware embodiment. Moreover, the disclosure may adopt a form of computer program product implemented on one or more computer-available storage media (including, but not limited to, a disk memory and an optical memory) including computer-available program codes.

The disclosure is described with reference to flowcharts and/or block diagrams of the method, equipment (system) and computer program product according to the embodiment of the disclosure. It should be understood that each flow and/or block in the flowcharts and/or the block diagrams and combinations of the flows and/or blocks in the flowcharts and/or the block diagrams may be implemented by computer program instructions. These computer program instructions may be provided for a universal computer, a dedicated computer, an embedded processor or a processor of other programmable data processing equipment to generate a machine, so that a device for realizing a function specified in one flow or more flows in the flowcharts and/or one block or more blocks in the block diagrams is generated by the instructions executed through the computer or the processor of the other programmable data processing equipment.

These computer program instructions may also be stored in a computer-readable memory capable of guiding the computer or the other programmable data processing equipment to work in a specific manner, so that a product including an instruction device may be generated by the instructions stored in the computer-readable memory, the instruction device realizing the function specified in one flow or many flows in the flowcharts and/or one block or many blocks in the block diagrams.

These computer program instructions may further be loaded onto a computer or other programmable data processing equipment, so that a series of operating steps are executed on the computer or the other programmable data processing equipment to generate processing implemented by the computer, and steps for realizing the function specified in one flow or many flows in the flowcharts and/or one block or many blocks in the block diagrams are provided by the instructions executed on the computer or the other programmable data processing equipment.

The above is only the preferred embodiment of the disclosure and not intended to limit the scope of the disclosure.

## Claims

1. A method for detecting a multipath frame header applied to multi-lane optical communications and comprising:
performing hard decision processing on input data according to a sample point sign bit of the input data to obtain a receiving sequence (101);
performing a sliding correlation operation on the receiving sequence and locally pre-stored frame header sequences corresponding to each lane to obtain operation results respectively (102), wherein the frame header sequences are configured to meet conditions of high autocorrelation and low cross correlation;
comparing the operation results with preset thresholds to obtain threshold decision results (103); and
performing frame header decision and lane decision according to the threshold decision results to detect a multipath frame header (104).

2. The method for detecting the multipath frame header according to claim 1, wherein, in the locally pre-stored frame header sequences corresponding to all the lanes, autocorrelations of each frame header sequence are higher than a first threshold value, and cross correlation between any two frame header sequences is lower than a second threshold value.

3. The method for detecting the multipath frame header according to claim 1 or 2, wherein performing hard decision processing on the input data according to the sample point sign bit of the input data to obtain the receiving sequence (101) comprises:
a hard decision result being 0 if the sample point sign bit is 0, a hard decision result being 1 if the sample point sign bit is 1, and hard decision results forming the receiving sequence.

4. The method for detecting the multipath frame header according to claim 3, wherein performing the sliding correlation operation on the receiving sequence and the locally pre-stored frame header sequences corresponding to each lane to obtain the operation results respectively (102) comprises:
performing a sliding exclusive or and summation operation on the receiving sequence and N frame header sequences corresponding to N lanes respectively, length of exclusive or and summation being the same as length of the frame header sequence, and the operation result being sliding exclusive or and summation result; and the sliding exclusive or and summation operation is performed on the receiving sequence and the N frame header sequences to obtain N operation results respectively, N being an integer more than 1.

5. The method for detecting the multipath frame header according to claim 4, wherein comparing the operation results with the preset thresholds to obtain the threshold decision results (103) comprises:
comparing the operation result of the sliding correlation operation over the receiving sequence and the nth frame header sequence with a first preset threshold and a second preset threshold respectively, and when the operation result is more than or equal to the first threshold, the threshold decision result indicates that the receiving sequence and the nth frame header sequence are opposite in phase; and when the operation result is smaller than or equal to the second threshold, the threshold decision result indicates that the receiving sequence and the nth frame header sequence are not opposite in phase, 0 <n<N and n being an integer.

6. The method for detecting the multipath frame header according to claim 5, wherein performing frame header decision and lane decision according to the threshold decision results (104) comprises:
when the operation result is smaller than or equal to the second threshold, making a decision that a position where the receiving sequence is located is a frame header position, and a lane number corresponding to the nth frame header sequence participating in the corresponding operation is acquired; otherwise, making a decision that the position where the receiving sequence is located is not the frame header position,

7. A device for detecting a multipath frame header, the device being applied to multi-lane optical communications and comprising:
a hard decision unit (10), a sliding correlation unit (20), a threshold decision unit (30) and a frame header decision and lane decision unit (40), wherein
the hard decision unit (10) is configured to perform hard decision processing on input data according to a sample point sign bit of the input data to obtain a receiving sequence;
the sliding correlation unit (20) is configured to perform a sliding correlation operation on the receiving sequence and locally pre-stored frame header sequences to obtain operation results respectively, wherein the frame header sequences are configured to meet conditions of high autocorrelation and low cross correlation;
the threshold decision unit (30) is configured to compare the operation results with preset thresholds to obtain threshold decision results; and
the frame header decision and lane decision unit (40) is configured to perform frame header decision and lane decision according to the threshold decision results to detect a multipath frame header.

8. The device for detecting the multipath frame header according to claim 7, wherein, in the locally pre-stored frame header sequences corresponding to all the lanes, autocorrelations of each frame header sequence are higher than a first threshold value, and cross correlation between any two frame header sequences is lower than a second threshold value.

9. The device for detecting the multipath frame header according to claim 7 or 8, wherein the hard decision unit (10) is further configured to, when performing hard decision according to the sample point sign bit of the input data, a hard decision result being 0 if the sample point sign bit is 0, a hard decision result being 1 if the sample point sign bit is 1, and hard decision results forming the receiving sequence.

10. The device for detecting the multipath frame header according to claim 9, wherein the sliding correlation unit (20) is further configured to perform a sliding exclusive or and summation operation on the receiving sequence and N frame header sequences corresponding to N lanes respectively, length of exclusive or and summation being the same as length of the frame header sequence, and the operation result being sliding exclusive or and summation result; and the sliding exclusive or and summation operation may be performed on the receiving sequence and the N frame header sequences to obtain N operation results respectively, N being an integer more than 1.

11. The device for detecting the multipath frame header according to claim 10, wherein the threshold decision unit (30) is further configured to compare the operation result of the sliding correlation operation over the receiving sequence and the nth frame header sequence with a first preset threshold and a second preset threshold respectively, and when the operation result is more than or equal to the first threshold, the threshold decision result indicates that the receiving sequence and the nth frame header sequence are opposite in phase; and when the operation result is smaller than or equal to the second threshold, the threshold decision result indicates that the receiving sequence and the nth frame header sequence are not opposite in phase, 0<n<N and n being an integer.

12. The device for detecting the multipath frame header according to claim 11, wherein the frame header decision and lane decision unit (40) is further configured to, when the operation result is smaller than or equal to the second threshold, make a decision that a position where the receiving sequence is located is a frame header position, and acquire a lane number corresponding to the nth frame header sequence participating in the corresponding operation.

13. A computer-readable storage medium, the storage medium comprising a set of computer-executable instructions, the instructions being configured to execute the method for detecting the multipath frame header according to any one of claims 1-6 when run on a computer.

14. A receiving end device, comprising the device for detecting the multipath frame header according to any one of claims 7-12.

## Patentansprüche

1. Verfahren zum Nachweisen eines Multipath frame header, das auf eine optische Mehrkanalkommunikation angewandt wird und umfasst:
Durchführen einer harte Entscheidung-Verarbeitung von Eingabedaten gemäß eines Stichprobenpunkt-Vorzeichenbits der Eingabedaten zum Erhalten einer Empfangssequenz (101);
Durchführen eines Gleitkorrelationsvorgangs mit der Empfangssequenz und lokalen, im Vorhinein gespeicherten Frame header-Sequenzen, die jedem Kanal entsprechen, so dass jeweilige Vorgangsergebnisse erhalten werden (102), wobei die Frame header-Sequenzen so ausgebildet sind, dass sie die Bedingungen einer hohen Autokorrelation und einer niedrigen Kreuzkorrelation erfüllen;
Vergleichen der Vorgangsergebnisse mit voreingestellten Schwellen zum Erhalten von Schwellenentscheidungsergebnissen (103); und
Durchführen einer Frame header-Entscheidung und einer Kanalentscheidung gemäß den Schwellenentscheidungsergebnissen zum Nachweisen eines Multipath frame header (104).

2. Verfahren zum Nachweisen eines Multipath frame header nach Anspruch 1, bei dem in den lokalen, im Vorhinein gespeicherten Frame header-Sequenzen, die allen Kanälen entsprechen, Autokorrelationen von jeder Frame header-Sequenz höher sind als ein erster Schwellenwert, und eine Kreuzkorrelation zwischen jedweden zwei Frame header-Sequenzen niedriger ist als ein zweiter Schwellenwert.

3. Verfahren zum Nachweisen eines Multipath frame header nach Anspruch 1 oder 2, bei dem das Durchführen einer harte Entscheidung-Verarbeitung der Eingabedaten gemäß des Stichprobenpunkt-Vorzeichenbits der Eingabedaten zum Erhalten einer Empfangssequenz (101) umfasst:
ein hartes Entscheidungsergebnis ist 0, wenn das Stichprobenpunkt-Vorzeichenbit 0 ist, ein hartes Entscheidungsergebnis ist 1, wenn das Stichprobenpunkt-Vorzeichenbit 1 ist, und harte Entscheidungsergebnisse, welche die Empfangssequenz bilden.

4. Verfahren zum Nachweisen eines Multipath frame header nach Anspruch 3, bei dem das Durchführen des Gleitkorrelationsvorgangs mit der Empfangssequenz und den lokalen, im Vorhinein gespeicherten Frame header-Sequenzen, die jedem Kanal entsprechen, so dass die jeweiligen Vorgangsergebnisse erhalten werden (102), umfasst:
Durchführen eines gleitenden exklusiven oder- und Summierungsvorgangs mit der Empfangssequenz und N Frame header-Sequenzen, die jeweils N Kanälen entsprechen, wobei die Länge des exklusiven oder und der Summierung mit der Länge der Frame header-Sequenz identisch ist, und wobei das Vorgangsergebnis das gleitende exklusive oder- und Summierungsergebnis ist; und der gleitende exklusive oder- und Summierungsvorgang mit der Empfangssequenz und den N Frame header-Sequenzen zum Erhalten von jeweiligen N Vorgangsergebnissen durchgeführt wird, wobei N eine ganze Zahl von mehr als 1 ist.

5. Verfahren zum Nachweisen eines Multipath frame header nach Anspruch 4, bei dem das Vergleichen der Vorgangsergebnisse mit den voreingestellten Schwellen zum Erhalten der Schwellenentscheidungsergebnisse (103) umfasst:
Vergleichen des Vorgangsergebnisses des Gleitkorrelationsvorgangs über der Empfangssequenz und der n-ten Frame header-Sequenz mit einer ersten voreingestellten Schwelle bzw. einer zweiten voreingestellten Schwelle, und wenn das Vorgangsergebnis größer als die erste Schwelle oder mit dieser identisch ist, das Schwellenentscheidungsergebnis angibt, dass die Empfangssequenz und die n-te Frame header-Sequenz entgegengesetzte Phasen aufweisen; und wenn das Vorgangsergebnis kleiner als die zweite Schwelle oder mit dieser identisch ist, das Schwellenentscheidungsergebnis angibt, dass die Empfangssequenz und die n-te Frame header-Sequenz keine entgegengesetzten Phasen aufweisen, wobei 0 < n < N und n eine ganze Zahl ist.

6. Verfahren zum Nachweisen eines Multipath frame header nach Anspruch 5, bei dem das Durchführen einer Frame header-Entscheidung und einer Kanalentscheidung gemäß den Schwellenentscheidungsergebnissen (104) umfasst:
wenn das Vorgangsergebnis kleiner als die zweite Schwelle oder mit dieser identisch ist, das Entscheiden, dass eine Position, an der sich die Empfangssequenz befindet, eine Frame header-Position ist, und eine Kanalzahl, die der n-ten Frame header-Sequenz entspricht, die an dem entsprechenden Vorgang teilnimmt, erfasst wird; ansonsten Entscheiden, dass die Position, an der sich die Empfangssequenz befindet, nicht die Frame header-Position ist.

7. Vorrichtung zum Nachweisen eines Multipath frame header, wobei die Vorrichtung auf eine optische Mehrkanalkommunikation angewandt wird und umfasst:
eine harte Entscheidung-Einheit (10), eine Gleitkorrelationseinheit (20), eine Schwellenentscheidungseinheit (30) und eine Frame header-Entscheidungs- und Kanalentscheidungseinheit (40), wobei
die harte Entscheidung-Einheit (10) zur Durchführung einer harte Entscheidung-Verarbeitung von Eingabedaten gemäß eines Stichprobenpunkt-Vorzeichenbits der Eingabedaten zum Erhalten einer Empfangssequenz ausgebildet ist;
die Gleitkorrelationseinheit (20) zum Durchführen eines Gleitkorrelationsvorgangs mit der Empfangssequenz und lokalen, im Vorhinein gespeicherten Frame header-Sequenzen ausgebildet ist, so dass jeweilige Vorgangsergebnisse erhalten werden, wobei die Frame header-Sequenzen so ausgebildet sind, dass sie die Bedingungen einer hohen Autokorrelation und einer niedrigen Kreuzkorrelation erfüllen;
die Schwellenentscheidungseinheit (30) zum Vergleichen der Vorgangsergebnisse mit voreingestellten Schwellen zum Erhalten von Schwellenentscheidungsergebnissen ausgebildet ist; und
die Frame header-Entscheidungs- und Kanalentscheidungseinheit (40) zum Durchführen einer Frame header-Entscheidung und einer Kanalentscheidung gemäß den Schwellenentscheidungsergebnissen zum Nachweisen eines Multipath frame header ausgebildet ist.

8. Vorrichtung zum Nachweisen eines Multipath frame header nach Anspruch 7, bei der in den lokalen, im Vorhinein gespeicherten Frame header-Sequenzen, die allen Kanälen entsprechen, Autokorrelationen von jeder Frame header-Sequenz höher sind als ein erster Schwellenwert, und eine Kreuzkorrelation zwischen jedweden zwei Frame header-Sequenzen niedriger ist als ein zweiter Schwellenwert.

9. Vorrichtung zum Nachweisen eines Multipath frame header nach Anspruch 7 oder 8, bei der die harte Entscheidung-Einheit (10) ferner so ausgebildet ist, dass dann, wenn sie eine harte Entscheidung gemäß dem Stichprobenpunkt-Vorzeichenbit der Eingabedaten durchführt, ein hartes Entscheidungsergebnis 0 ist, wenn das Stichprobenpunkt-Vorzeichenbit 0 ist, ein hartes Entscheidungsergebnis 1 ist, wenn das Stichprobenpunkt-Vorzeichenbit 1 ist, und harte Entscheidungsergebnisse die Empfangssequenz bilden.

10. Vorrichtung zum Nachweisen eines Multipath frame header nach Anspruch 9, bei der die Gleitkorrelationseinheit (20) ferner zum Durchführen eines gleitenden exklusiven oder- und Summierungsvorgangs mit der Empfangssequenz und N Frame header-Sequenzen, die jeweils N Kanälen entsprechen, ausgebildet ist, wobei die Länge des exklusiven oder und der Summierung mit der Länge der Frame header-Sequenz identisch ist, und wobei das Vorgangsergebnis das gleitende exklusive oder- und Summierungsergebnis ist; und der gleitende exklusive oder- und Summierungsvorgang mit der Empfangssequenz und den N Frame header-Sequenzen zum Erhalten von jeweiligen N Vorgangsergebnissen durchgeführt wird, wobei N eine ganze Zahl von mehr als 1 ist.

11. Vorrichtung zum Nachweisen eines Multipath frame header nach Anspruch 10, bei der die Schwellenentscheidungseinheit (30) ferner zum Vergleichen des Vorgangsergebnisses des Gleitkorrelationsvorgangs über der Empfangssequenz und der n-ten Frame header-Sequenz mit einer ersten voreingestellten Schwelle bzw. einer zweiten voreingestellten Schwelle ausgebildet ist, und wenn das Vorgangsergebnis größer als die erste Schwelle oder mit dieser identisch ist, das Schwellenentscheidungsergebnis angibt, dass die Empfangssequenz und die n-te Frame header-Sequenz entgegengesetzte Phasen aufweisen; und wenn das Vorgangsergebnis kleiner als die zweite Schwelle oder mit dieser identisch ist, das Schwellenentscheidungsergebnis angibt, dass die Empfangssequenz und die n-te Frame header-Sequenz keine entgegengesetzten Phasen aufweisen, wobei 0 < n < N und n eine ganze Zahl ist.

12. Vorrichtung zum Nachweisen eines Multipath frame header nach Anspruch 11, bei der die Frame header-Entscheidungs- und Kanalentscheidungseinheit (40) ferner so ausgebildet ist, dass dann, wenn das Vorgangsergebnis kleiner als die zweite Schwelle oder mit dieser identisch ist, entschieden wird, dass eine Position, an der sich die Empfangssequenz befindet, eine Frame header-Position ist, und eine Kanalzahl, die der n-ten Frame header-Sequenz entspricht, die an dem entsprechenden Vorgang teilnimmt, erfasst wird.

13. Computerlesbares Speichermedium, wobei das Speichermedium einen Satz von computerausführbaren Anweisungen umfasst, wobei die Anweisungen so ausgebildet sind, dass sie das Verfahren zum Nachweisen eines Multipath frame header nach einem der Ansprüche 1 bis 6 ausführen, wenn sie auf einem Computer ausgeführt werden.

14. Empfangsendvorrichtung, welche die Vorrichtung zum Nachweisen eines Multipath frame header nach einem der Ansprüche 7 bis 12 umfasst.

## Revendications

1. Procédé de détection d'un en-tête de trame à trajets multiples appliqué à des communications optiques à voies multiples et comprenant :
la réalisation d'un traitement de décision stricte sur des données d'entrée selon un bit de signe de point échantillon des données d'entrée pour obtenir une séquence de réception (101) ;
la réalisation d'une opération de corrélation glissante sur la séquence de réception et des séquences d'en-tête de trame préstockées localement correspondant à chaque voie pour obtenir des résultats d'opération (102) respectivement, dans lequel les séquences d'en-tête de trame sont configurées pour satisfaire des conditions d'autocorrélation élevée et de corrélation croisée faible ;
la comparaison des résultats d'opération avec des seuils prédéfinis pour obtenir des résultats de décision de seuil (103) ; et
la réalisation d'une décision d'en-tête de trame et d'une décision de voie selon les résultats de décision de seuil pour détecter un en-tête de trame à trajets multiples (104).

2. Procédé de détection de l'en-tête de trame à trajets multiples selon la revendication 1, dans lequel, dans les séquences d'en-tête de trame préstockées localement correspondant à toutes les voies, des autocorrélations de chaque séquence d'en-tête de trame sont supérieures à une première valeur seuil, et une corrélation croisée entre deux séquences quelconques d'en-tête de trame est inférieure à une seconde valeur seuil.

3. Procédé de détection de l'en-tête de trame à trajets multiples selon la revendication 1 ou 2, dans lequel la réalisation d'un traitement de décision stricte sur les données d'entrée selon le bit de signe de point échantillon des données d'entrée pour obtenir la séquence de réception (101) comprend :
un résultat de décision stricte valant 0 si le bit de signe de point échantillon vaut 0, un résultat de décision stricte valant 1 si le bit de signe de point échantillon vaut 1, et des résultats de décision stricte formant la séquence de réception.

4. Procédé de détection de l'en-tête de trame à trajets multiples selon la revendication 3, dans lequel la réalisation de l'opération de corrélation glissante sur la séquence de réception et les séquences d'en-tête de trame préstockées localement correspondant à chaque voie pour obtenir les résultats d'opération (102) respectivement comprend :
la réalisation d'une opération de sommation et OU exclusif glissante sur la séquence de réception et N séquences d'en-tête de trame correspondant à N voies respectivement, une longueur de OU exclusif et de sommation étant la même qu'une longueur de la séquence d'en-tête de trame, et le résultat d'opération étant un résultat de sommation et OU exclusif glissant ; et l'opération de sommation et OU exclusif glissante est réalisée sur la séquence de réception et les N séquences d'en-tête de trame pour obtenir N résultats d'opération respectivement, N étant un nombre entier supérieur à 1.

5. Procédé de détection de l'en-tête de trame à trajets multiples selon la revendication 4, dans lequel la comparaison des résultats d'opération aux seuils prédéfinis pour obtenir les résultats de décision de seuil (103) comprend :
la comparaison du résultat d'opération de l'opération de corrélation glissante sur la séquence de réception et la n^{ième} séquence d'en-tête de trame à un premier seuil prédéfini et un second seuil prédéfini respectivement, et lorsque le résultat d'opération est supérieur ou égal au premier seuil, le résultat de décision de seuil indique que la séquence de réception et la n^{ième} séquence d'en-tête de trame ont des phases opposées ; et lorsque le résultat d'opération est inférieur ou égal au second seuil, le résultat de décision de seuil indique que la séquence de réception et la n^{ième} séquence d'en-tête de trame n'ont pas des phases opposées, 0 < n < N et n étant un nombre entier.

6. Procédé de détection de l'en-tête de trame à trajets multiples selon la revendication 5, dans lequel la réalisation d'une décision d'en-tête de trame et d'une décision de voie selon les résultats de décision de seuil (104) comprend :
lorsque le résultat d'opération est inférieur ou égal au second seuil, la prise d'une décision indiquant qu'une position où la séquence de réception est située est une position d'en-tête de trame, et un numéro de voie correspondant à la n^{ième} séquence d'en-tête de trame participant à l'opération correspondante est acquis ; sinon, la prise d'une décision indiquant que la position où la séquence de réception est située n'est pas la position d'en-tête de trame.

7. Dispositif de détection d'un en-tête de trame à trajets multiples, le dispositif étant appliqué à des communications optiques à voies multiples et comprenant :
une unité de décision stricte (10), une unité de corrélation glissante (20), une unité de décision de seuil (30) et une unité de décision de voie et de décision d'en-tête de trame (40), dans lequel
l'unité de décision stricte (10) est configurée pour réaliser un traitement de décision stricte sur des données d'entrée correspondant à un bit de signe de point échantillon des données d'entrée pour obtenir une séquence de réception ;
l'unité de corrélation glissante (20) est configurée pour réaliser une opération de corrélation glissante sur la séquence de réception et des séquences d'en-tête de trame préstockées localement pour obtenir des résultats d'opération respectivement, dans lequel les séquences d'en-tête de trame sont configurées pour satisfaire des conditions d'autocorrélation élevée et de corrélation croisée faible ;
l'unité de décision de seuil (30) est configurée pour comparer les résultats d'opération à des seuils prédéfinis pour obtenir des résultats de décision de seuil ; et
l'unité de décision de voie et de décision d'en-tête de trame (40) est configurée pour réaliser une décision d'en-tête de trame et une décision de voie selon les résultats de décision de seuil pour détecter un en-tête de trame à trajets multiples.

8. Dispositif de détection de l'en-tête de trame à trajets multiples selon la revendication 7, dans lequel, dans les séquences d'en-tête de trame préstockées localement correspondant à toutes les voies, des autocorrélations de chaque séquence d'en-tête de trame sont supérieures à une première valeur seuil, et une corrélation croisée entre deux séquences d'en-tête de trame est inférieure à une seconde valeur seuil.

9. Dispositif de détection de l'en-tête de trame à trajets multiples selon la revendication 7 ou 8, dans lequel l'unité de décision stricte (10) est en outre configurée, lors de la réalisation d'une décision stricte selon le bit de signe de point échantillon des données d'entrée, de sorte qu'un résultat de décision stricte vaut 0 si le bit de signe de point échantillon vaut 0, un résultat de décision stricte vaut 1 si le bit de signe de point échantillon vaut 1, et des résultats de décision stricte forment la séquence de réception.

10. Dispositif de détection de l'en-tête de trame à trajets multiples selon la revendication 9, dans lequel l'unité de corrélation glissante (20) est en outre configurée pour réaliser une opération de sommation et OU exclusif glissante sur la séquence de réception et N séquences d'en-tête de trame correspondant à N voies respectivement, une longueur de OU exclusif et de sommation étant la même qu'une longueur de la séquence d'en-tête de trame, et le résultat d'opération étant un résultat OU exclusif et de sommation glissant ; et l'opération de sommation et OU exclusif glissante peut être réalisée sur la séquence de réception et les N séquences d'en-tête de trame pour obtenir N résultats d'opération respectivement, N étant un nombre entier supérieur à 1.

11. Dispositif de détection de l'en-tête de trame à trajets multiples selon la revendication 10, dans lequel l'unité de décision de seuil (30) est en outre configurée pour comparer le résultat d'opération de l'opération de corrélation glissante sur la séquence de réception et la n^{ième} séquence d'en-tête de trame à un premier seuil prédéfini et un second seuil prédéfini respectivement, et lorsque le résultat d'opération est supérieur ou égal au premier seuil, le résultat de décision de seuil indique que la séquence de réception et la n^{ième} séquence d'en-tête de trame ont des phases opposées ; et lorsque le résultat d'opération est inférieur ou égal au second seuil, le résultat de décision de seuil indique que la séquence de réception et la n^{ième} séquence d'en-tête de trame n'ont pas des phases opposées, 0 < n < N et n étant un nombre entier.

12. Dispositif de détection de l'en-tête de trame à trajets multiples selon la revendication 11, dans lequel l'unité de décision de voie et de décision d'en-tête de trame (40) est en outre configurée, lorsque le résultat d'opération est inférieur ou égal au second seuil, pour prendre une décision indiquant qu'une position où la séquence de réception est située est une position d'en-tête de trame, et acquérir un numéro de voie correspondant à la n^{ième} séquence d'en-tête de trame participant à l'opération correspondante.

13. Support de stockage lisible par ordinateur, le support de stockage comprenant un ensemble d'instructions exécutables par ordinateur, les instructions étant configurées pour exécuter le procédé de détection de l'en-tête de trame à trajets multiples selon l'une quelconque des revendications 1 à 6 lorsqu'elles sont exécutées sur un ordinateur.

14. Dispositif d'extrémité de réception, comprenant le dispositif de détection de l'en-tête de trame à trajets multiples selon l'une quelconque des revendications 7 à 12.
